# EUROPÄISCHE PATENTSCHRIFT

(11) **EP 0 725 713 B1**
(45) Veröffentlichungstag und Bekanntmachung des Hinweises auf die Patenterteilung: **29.07.1998**
(21) Anmeldenummer: 94930107.1
(22) Anmeldetag: 24.10.1994
(51) Int. Cl.: B26D 9/00, B26D 3/12

(54) **VORRICHTUNG ZUR HERSTELLUNG UNTEREINANDER IM BEREICH DER LAUFFLÄCHE ZUSAMMENHÄNGENDER REIFENSEKTOREN AUS EINEM REIFEN**
DEVICE FOR MANUFACTURING TIRE SECTORS INTERCONNECTED IN THE AREA OF THE TIRE CAP FROM USED TIRES
DISPOSITIF DE FABRICATION DE SECTEURS DE PNEUS INTERCONNECTES DANS LA ZONE DE LA CHAPE A PARTIR DE PNEUS USAGES

(30) Priorität: 25.10.1993 AT 2153/93
(43) Veröffentlichungstag der Anmeldung: 14.08.1996
(73) Patentinhaber: Lederbauer, Wolfgang, Dipl.-Ing. Dr., A-1010 Wien (AT)
(72) Erfinder: Lederbauer, Wolfgang, Dipl.-Ing. Dr., A-1010 Wien (AT)
(74) Vertreter: Casati, Wilhelm, Dipl.-Ing.
(86) Internationale Anmeldenummer: AT9400156
(87) Internationale Veröffentlichungsnummer: WO9511784

(56) Entgegenhaltungen:
- AT-A- 369 671
- DE-A- 2 531 923
- DE-A- 3 936 083
- DE-A- 4 112 167
- FR-A- 2 631 563
- FR-A- 2 674 473
- GB-A- 379 302
- GB-A- 2 181 085
- US-A- 5 246 754

## Beschreibung

Die Erfindung bezieht sich auf eine Vorrichtung zur Herstellung untereinander im Bereich der Lauffläche zusammenhängender Reifensektoren aus einem Reifen durch Herstellung von von der Reifenöffnung in den beiden Reifenflanken in Richtung zur Laufschicht verlaufenden Schnitten, die die Oberfläche der Laufschicht jedoch nicht erreichen, wobei ein Gestell für den Reifen eine Auflage trägt, die mit in der Arbeitsstellung des Reifens zur Seite der Reifenflanken liegenden Abstützungen für die Reifenflanken beim Schnittvorgang versehen ist, und wobei das Gestell Führungen für zumindest ein Schnittmesser trägt, das mit Schneiden zur Herstellung der Schnitte in den beiden Reifenflanken versehen ist und mit einem Antrieb zur Bewegung entlang der Führungen verbunden ist, wobei die Führungen des Schnittmessers im wesentlichen senkrecht zu den durch die Abstützungen gebildeten Stützflächen verlaufen.

Derartige zusammenhängende Reifensektoren werden zur Herstellung von begrünten Aufbauten verwendet, insbesondere zur Begrenzung von Fahrbahnen, Parkflächen, aber auch als Vorbau für bereits bestehende Wände zum Zwecke der Schalldämpfung. Die geschlitzten Reifen werden hiebei an einer Stelle völlig durchtrennt, so daß die untereinander zusammenhängenden Reifensektoren auseinandergezogen und streifenartig auf Traggerüsten befestigt werden können. Durch die zwischen den einzelnen, so auseinandergezogenen Reifen verbleibenden Zwischenräume kann eine Begrünung hindurchwachsen, die ihrerseits durch das Reifenmaterial vor Spritzwasser und Wind geschützt ist, von oben durch Regen und gegebenfalls zusätzliche Berieselung aber erreichbar ist, so daß die Begrünung schnell und dauerhaft wächst. Derartige Aufbauten haben sich sehr bewährt und werden im zunehmenden Maße auf verschiedenen Anwendungsgebieten eingesetzt. Bisher war es jedoch verhältnismäßig mühsam, die Reifen in der oben beschriebenen Weise aufzuarbeiten, da ja das Reifenmaterial widerstandsfähig und noch dazu in der Regel im Bereich der Reifenflankenwülste mit Einlagen versehen ist. Diese Materialien mußten bisher händisch durchsägt werden, um die erwähnten Schnitte zu erhalten. Diese Arbeiten waren mühsam und zeitraubend, so daß der Wunsch bestand, die Herstellung derartiger Schnitte zu automatisieren. Zur Erzeugung solcher Schnitte ist eine Vorrichtung der eingangs geschilderten Art bekannt (FR-A-2, 631.563), bei welcher der Reifen auf eine Auflage aufgelegt, auf dieser durch in die Reifenöffnung eingreifende Zentrierorgane gehalten und durch von oben abgesenkte Schnittmesser mit den Schnitten versehen wird. Da dies beim Schnittvorgang zu durchtrennende Material zäh bzw. hart ist, setzt es dem Schnitt erheblichen Widerstand entgegen. Es treten daher erhebliche Belastungsspitzen des Antriebes auf.

Die Erfindung setzt sich zur Aufgabe, die Herstellung der erwähnten Schnitte im Reifenmaterial, insbesondere von Altreifen, zu automatisieren und hiebei die auftretenden Belastungsspitzen zu mildern. Die Erfindung löst diese Aufgabe dadurch, daß, in der eingangsgenannten Vorrichtung, die Abstützungen Ausnehmungen für den Eintritt der Schnittmesser aufweisen und Gegenlager für die durch den Antrieb aus einer Mittelstellung zur Erzeugung der Schnitte in den Reifenflanken hin- und herbewegten Schnittmesser bilden, die einander entgegengesetzt gerichtete Schneiden tragen, welche die jeweilige Reifenflanke von deren Innenseite aus durchsetzen. Jedes Schnittmesser wird hiebei durch den Antrieb entlang der Führungen in Richtung auf eine Abstützung zu bewegt, wobei zwischen der Schneide des Schnittmessers und der Abstützung eine Reifenflanke des mit den Schnitten zu versehenden Reifens liegt. Das Schnittmesser durchtrennt diese Reifenflanke vom Bereich des Wulstes weg bis in den Bereich der Lauffläche, erreicht jedoch die Oberfläche derselben nicht, so daß dieser Schnitt den Reifen an der betreffenden Stelle nicht völlig durchtrennt. In gleicher Weise wirkt das die entgegengesetzt gerichtete Schneide tragende Schnittmesser auf die andere Reifenflanke.

Gegebenenfalls kann auch ein einziges Schnittmesser für das Durchschneiden beider Reifenflanken vorgesehen werden. Hiefür besteht eine bevorzugte Ausführungsvariante der Erfindung darin, daß für die Herstellung jeweils eines Schnittes in den beiden Reifenflanken ein Schnittmesser vorhanden ist, das an zwei einander entgegengesetzt gerichteten Rändern ebenso gerichtete Schneiden trägt. Dieses Schnittmesser liegt in der Ausgangsstellung zwischen den beiden Reifenflanken, wobei jeweils eine Abstützung außen an der Seite jeder Reifenflanke liegt. Das Schnittmesser durchtrennt dann zuerst die eine Reifenflanke durch Bewegung in der einen Richtung, wird sodann zurückbewegt und geht hiebei über die Ausgangsstellung (Mittelstellung) hinaus, und zwar so weit, daß auch die andere Reifenflanke durchtrennt wird. Die beiden Schnitte in den Reifenflanken liegen dann in einer gemeinsamen Ebene, was jedoch nicht zwingend ist, da die beschriebene Vorgangsweise auch mit zwei getrennten Messern erzielbar ist, deren Schneiden nicht in einer gemeinsamen Ebene liegen, sondern in Umfangsrichtung des Reifens gesehen, relativ zueinander versetzt sind.

Besonders günstig ist es, wenn in den Reifen außer den erwähnten Schnitten auch Löcher im Bereich der Reifenflanke eingearbeitet werden, da es sich gezeigt hat, daß solche Löcher das Hindurchwachsen der Begrünung begünstigen. Solche Löcher mußten bisher händisch oder mit Hilfe von Pressen gestanzt werden, was ebenfalls mühsam und zeitraubend war. Eine bevorzugte Weiterbildung der Erfindung besteht daher darin, daß zur zusätzlichen Herstellung zumindest eines Loches im Bereich der Reifenflanke im Gestell auch Führungen für zumindest einen Lochstempel vorhanden sind, der durch einen Antrieb entlang der Führungen bewegbar ist, daß eine weitere Abstützung in der Arbeitsstellung des Reifens zwischen den beiden Reifenflanken liegt und mit Öffnungen für den Eintritt des Lochstempels versehen ist, wobei mindestens eine der zur Seite der Reifenflanken liegenden Abstützungen Öffnungen für den Durchtritt des Lochstempels zusätzlich zu den Ausnehmungen für den Eintritt der Schnittmesser aufweist. Für einen solchen Lochstempel gilt ähnliches, wie es oben in Bezug auf die Schnittmesser ausgeführt wurde, d.h., es kann ein einziger Lochstempel auch beide Reifenflanken zur Herstellung von Löchern bearbeiten. In der Regel kommt man jedoch mit Löchern in einer der beiden Reifenflanken aus, wobei ein einziges Loch pro Reifensektor genügt, es sind jedoch zahlreiche Anwendungsfälle möglich, bei welchem pro Reifensektor mehrere Löcher vorgesehen sein können, die in beliebiger Weise auf die beiden Reifenflanken verteilt sein können. Beispielsweise ist es in Sonderfällen, in denen es besonders auf eine Schalldämmung ankommt, besonders günstig, jene Reifenflanken, welche in der am Aufbau montierten Stellung des mit den Schnitten versehenen Reifens der Schallquelle zugewendet sind, mit einer Vielzahl kleiner Löcher zu versehen, welche Hohlräume bilden, die zur Absorption der Schallwellen dienen.

Im Prinzip können Anzahl, Größe und Querschnittsform der Löcher beliebig gewählt werden. Die Kreisform ist natürlich die einfachste und häufigste, jedoch lassen sich, falls gewünscht, durch geeignete Querschnittsformen der Lochstempel und bzw. oder durch mehrfache Anwendung der Lochstempel pro Loch, beliebige Sonderformen erzielen.

Im Prinzip ist es gleichgültig, ob der Lochstempel von innen, d.h. vom Bereich zwischen den beiden Reifenflanken ausgehend, oder von außen auf die betreffende Reifenflanke zur Erzeugung des Loches einwirkt. Konstruktiv wesentlich einfacher ist jedoch die Einwirkung des Lochstempels von außen. Auch in diesem Fall wirkt mit dem Lochstempel jene weitere Abstützung zusammen, welche in der Arbeitsstellung des Reifens (das ist jene Lage, in welcher er bearbeitet wird) zwischen den beiden Reifenflanken liegt.

Wie bereits erwähnt, ist das beim Schnittvorgang zu durchtrennende Material zäh bzw. hart und setzt dem Schnitt erheblichen Widerstand entgegen. Das gleiche gilt für die Ausstanzung der Löcher. Es sind daher erhebliche Belastungsspitzen des Antriebes zu erwarten, wenn ein Schnitt zeitlich mit einem weiteren Schnitt und bzw. oder mit der Erzeugung eines Loches zusammenfällt. Diese Belastungsspitzen lassen sich mildern, wenn die Schnitte in den beiden Reifenflanken und die Erzeugung der Löcher nicht gleichzeitig, sondern zumindest teilweise aufeinanderfolgend, d.h. zeitlich verschoben, vorgenommen werden. Die Erzeugung jeweils eines Schnittes in beiden Reifenflanken mittels eines einzigen Schnittmessers, welches an zwei einander gegenüberliegenden Seiten Schneiden trägt, kommt dem entgegen, ebenso eine Ausführungsvariante der Erfindung, bei welcher zumindest zwei Lochstempel vorhanden sind, die relativ zueinander in ihrer Bewegungsrichtung versetzt angeordnet sind und daher nacheinander zur Wirkung kommen.

Wie bereits erwähnt, bilden die Abstützungen Gegenlager beim Schnitt- bzw. Lochungsvorgang. Im Rahmen der Erfindung ist es günstig, wenn die Ausnehmungen für die Schnittmesser von Schlitzen gebildet sind. Dies verlängert die Standzeit der Messer wesentlich.

Es ist zweckmäßig, wenn die Auflage und bzw. oder die Abstützungen auswechselbar und bzw. oder höhenverstellbar sind. Auf diese Weise läßt sich eine Anpassung der Vorrichtung an unterschiedliche Reifenformate in einfacher Weise durchführen. Um hiebei die Auflage des Reifens beim Schnitt- bzw. Locherzeugungsvorgang möglichst satt zu gestalten und damit Verkantungen zu vermeiden, ist zweckmäßig im Rahmen der Erfindung die Auflage entsprechend der Krümmung der inneren Öffnung des zu bearbeitenden Reifens abgewinkelt oder gebogen.

Bei sehr dicken bzw. großen Reifen, z. B. Reifen von Lastkraftfahrzeugen, Traktoren usw., kann es zweckmäßig sein, wenn der von zumindest einem Schnittmesser erzeugte Schnitt bis in die Laufschicht des Reifens hineinreicht. Dies kann eine teilweise oder völlige Durchtrennung von in der Laufschicht des Reifens eingebetteten Einlagen beinhalten. Auf diese Weise lassen sich auch bei solchen Reifentypen, nach Vornahme der Schnitte, die einzelnen Reifensektoren verhältnismäßig leicht auseinanderziehen, so daß der streifenartig auseinandergezogene Reifen am Traggestell des Aufbaues ohne Schwierigkeiten befestigt werden kann.

In der Regel arbeitet die Vorrichtung so, daß sie den Reifen mit den Löchern und solchen Schnitten versieht, welche den Reifen nicht völlig durchtrennen. Der abschließende, den Reifen völlig durchtrennende Schnitt, welcher also die Lauffläche an einer Stelle aufschneidet, wird zumeist händisch bzw. auf einer gesonderten Stanze vorgenommen. Es ist jedoch auch möglich, die erfindungsgemäße Vorrichtung mit einer Zusatzeinrichtung zu versehen, welche ein zusätzliches Messer aufweist, welches den Reifen an einer Stelle völlig - also auch im Bereich der Lauffläche - durchtrennt.

Einfache, gemäß der Erfindung ausgebildete Vorrichtungen werden so bedient, daß der Reifen in die Vorrichtung eingelegt wird und sodann der Antrieb so betätigt wird, daß das oder die Schnittmesser sowie der oder die Lochstempel ihre Hübe, zweckmäßig zeitlich abgestuft, vollführen. Nach Beendigung der so erzeugten Schnitte bzw. Löcher wird der Reifen händisch relativ zum Gestell so verdreht, daß die - gesehen in Umfangsrichtung des Reifens - nächstfolgenden Löcher bzw. Schnitte erzeugt werden können. Es kann jedoch im Rahmen der Erfindung auch eine Einrichtung an der Vorrichtung vorgesehen sein, z.B. eine Hubzange, mit welcher diese Verdrehung des Reifens automatisch durchführbar ist.

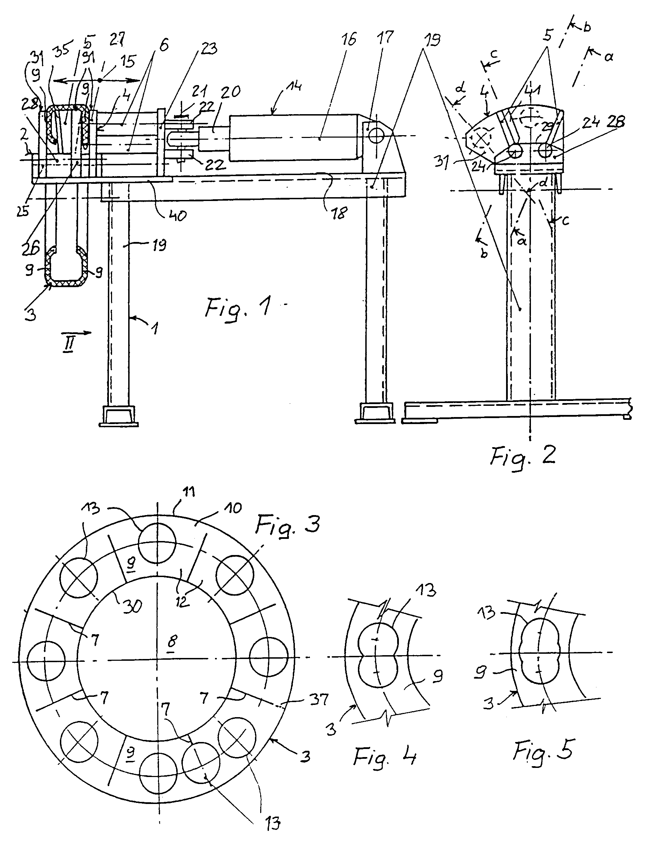

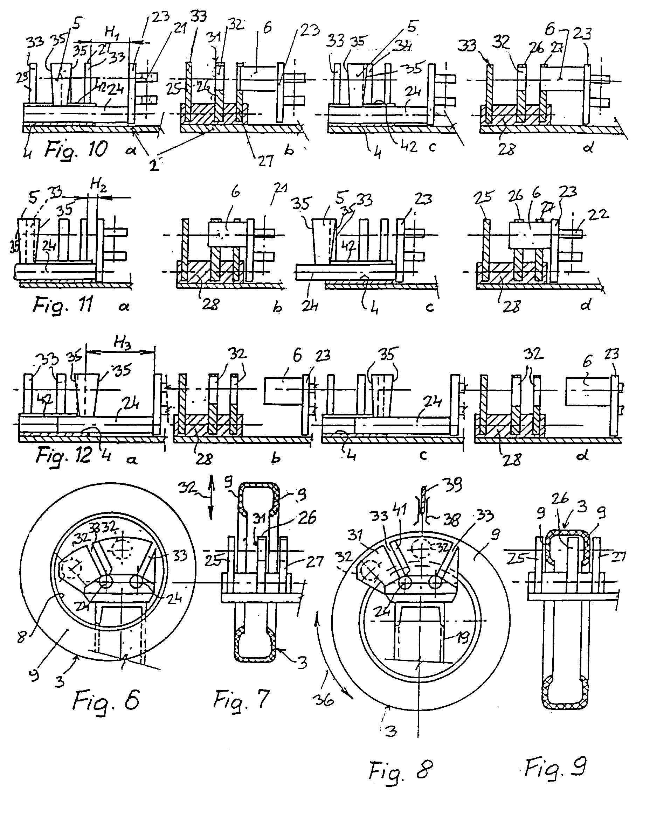

In der Zeichnung sind Ausführungsbeispiele der Erfindung schematisch dargestellt. Fig.1 Zeigt die Vorrichtung in Seitenansicht, wobei der eingelegte Reifen im Schnitt dargestellt ist. Fig.2 zeigt eine Stirnansicht der Vorrichtung in Richtung des Pfeiles II der Fig.1, wobei der Reifen der besseren Übersichtlichkeit halber nicht dargestellt ist. Fig.3 zeigt einen mit der Vorrichtung fertig bearbeiteten Reifen in Ansicht. Die Fig.4 und 5 zeigen Ausführungsvarianten der Löcher im Reifen. Fig.6 zeigt die Einlegung des Reifens, gesehen in Richtung des Pfeiles 11 der Fig.1. Fig.7 ist ein Vertikalschnitt zu Fig.6. Fig.8 zeigt, wie der Reifen nach Herstellung zweier Schnitte und zweier Löcher vor der Durchführung des nächsten Schnitt- bzw. Lochvorganges verdreht wird. Fig.9 ist ein Vertikalschnitt zu Fig.8. Die Fig.10, 11 und 12 zeigen aufeinanderfolgende Arbeitsphasen der Vorrichtung in jeweils vier Schnitten in Fig.2, wobie dort die Schnitte mit a-a bzw. b-b bzw. c-c bzw. d-d bezeichnet sind.

Die Vorrichtung nach den Fig.1 und 2 hat ein Gestell 1, an dem oben eine Auflage 2 für den zu bearbeitenden Reifen 3 auswechselbar befestigt ist, z.B. durch Anschraubung am Gestell 1. Weiters trägt das Gestell 1 Führungen 4 für zwei Schnittmesser 5 und zwei Lochstempel 6. Die Schnittmesser 5 dienen zur Herstellung von, vorzugsweise radial verlaufenden, Schnitten 7 im Reifen 3 (Fig.3), die von der inneren Öffnung 8 in den beiden Reifenflanken 9 in Richtung zur Laufschicht 10 verlaufen, deren Oberfläche 11 jedoch nicht erreichen. Auf diese Weise wird der Reifen 3 in untereinander im Bereich der Laufschicht 10 zusammenhängende Reifensektoren 12 unterteilt. Die Lochstempel 6 dienen zur Erzeugung von Löchern 13 in den einzelnen Reifensektoren 12.

Ferner trägt das Gestell 1 einen Antrieb 14, mit welchem sowohl die Schnittmesser 5 als auch die Lochstempel 6 in Richtung des Doppelpfeiles 15 hin und herbewegt werden können. Hierzu ist der Antrieb 14 zweckmäßig als doppelt wirkender hydraulischer Zylinder 16 ausgebildet, der mit seinem einen Ende gelenkig an einer Konsole 17 befestigt ist, die von einer Platte 18 des Gestelles 1 getragen wird, welche auf Ständern 19 aufruht. Die Kolbenstange 20 des Zylinders 16 ist mittels eines vertikalen Bolzens 21 gelenkig mit zwei Pratzen 22 verbunden, die von einer Platte 23 abstehen, welche die beiden Lochstempel 6 an ihren Stirnenden verbindet und an welcher auch horizontal verlaufende Rohre 24 befestigt sind, welche die Schnittmesser 5 tragen. Die Lochstempel 6 und die Rohre 24 sind hiebei in den Führungen geführt, welche von drei vertikalen Platten 25, 26, 27 gebildet sind, die in einem Grundkörper 28 der Auflage 2 eingesetzt sind. Die Anordnung ist so getroffen, daß die mittige Platte 26 in der Bearbeitungsstellung des Reifens 3 (Fig.1) zwischen den beiden Reifenflanken 9 steht, wogegen die beiden äußeren Platten 25,27 außen an den beiden Reifenflanken 8 anliegen. Der Grundkörper 28 hat eine Deckfläche 29 mit polygonal abgewinkelter Querschnittsform, die zumindest annähernd der Form des Umfanges 30 (Fig.3) der Reifenöffnung 8 folgt. Dadurch wird eine satte Auflage des zu bearbeitenden Reifens 3 auf der Auflage 2 gesichert.

Die Platten 25, 26, 27 bilden zugleich Abstützungen 31 für den zu bearbeitenden Reifen 3 während der Herstellung der Schnitte 7 bzw. der Löcher 13. Diese Herstellung ist in den Fig.10 bis 12 anhand mehrerer Arbeitsphasen veranschaulicht. Fig.10 zeigt die Ausgangstellung (Neutralstellung), in welcher der Reifen 3, zweckmäßig ein abgefahrener Altreifen, in die Vorrichtung eingesetzt wird, was in den Fig.6 und 7 dargestellt ist. Hiezu wird der Reifen 3 mit seiner mittigen Öffnung 8 von der in Fig.1 links liegenden Stirnseite der Vorrichtung so über die Auflage 2 und die Führungen 4 gehoben, daß die beiden Reifenflanken 9 (Fig.7) beidseits der mittigen Platte 26 der Abstützung 31 liegen. Sodann wird der Reifen 3 in Richtung des Doppelpfeiles 32 (Fig.7) nach unten abgesenkt, bis er auf der Auflage 2 aufliegt. Diese Stellung ist in Fig.9 dargestellt. Die Bearbeitung kann nun beginnen. Zweckmäßig wird hiezu der doppeltwirkende Zylinder 16 des Antriebes 14 über eine elektronische Steuerung angesteuert. Zunächst wird der Zylinder 16 so mit Druckflüssigkeit beschickt, daß die Kolbenstange 20 in Richtung des Doppelpfeiles 15 (Fig.1) nach links bewegt wird. Hiebei werden die beiden Schnittmesser 5 und die beiden Lochstempel 6 ebenfalls nach links bewegt, da diese Werkzeuge ja mit der Kolbenstange 20 bewegungsschlüssig verbunden sind. In der Ausgangsstellung ist die Kolbenstange 20 etwa um den halben Hub aus dem Zylinder 16 ausgefahren, welche Hubstrecke in Fig.10a mit H₁ bezeichnet ist. Wie die Fig.10a und 10c zeigen, sind die beiden Schnittmesser 5 auf den sie tragenden Rohren 24 so montiert, daß sie - gesehen in Bewegungsrichtung (Pfeil 15 in Fig.1) relativ zueinander versetzt sind, also beim Schnittvorgang nacheinander zur Wirkung kommen. In analoger Weise sind die beiden Lochstempel 6, welche an der Platte 23 befestigt sind, unterschiedlich lang, so daß auch sie zeitlich versetzt zur Wirkung kommen. Ferner ist die Anordnung zweckmäßig so getroffen, daß auch zwischen den Schnittmessern 5 und den Lochstempeln 6 eine derartige Versetzung besteht, daß diese Werkeuge jeweils zeitlich gegeneinander versetzt zur Wirkung kommen. Dadurch werden die Spitzenbelastungen der Energie, welche für den Betrieb des Antriebes 14 nötig ist, wesentlich herabgesetzt.

Bei der Bewegung der Schnittmesser 5 und der Lochstempel 6 nach links (Fig.10) gelangen diese Werkzeuge allmählich in die Stellung nach Fig.11. Hiebei erzeugt zuerst der längere Lochstempel 6 ein Loch 13 in der in Fig.1 rechts liegenden Reifenflanke 9. Das aus dieser Reifenflanke 9 hiebei durch den Lochstempel 6 ausgeschnittene, in der Regel kreisförmige, Reifenflankenstück wird durch eine dem Querschnitt des Lochstempels 6 angepaßte Öffnung 32 der mittleren Abstützung 31 ausgestossen, durch welche Öffnung 32 dann dieser Lochstempel 6 hindurchtritt (Fig.11d). Sodann erzeugt der andere, kürzere Lochstempel 6 in analoger Weise ein zweites Loch in derselben Reifenflanke 9 und erreicht schließlich die Stellung nach Fig.11d. Als nächstes kommt das weiter links liegende Schnittmesser 5 (Fig.10c) zur Wirkung und erzeugt einen Schnitt in der Fig.1 links liegenden Reifenflanke 9. Es erreicht schließlich die Stellung nach Fig.11c, wobei dieses Schnittmesser 5, das in der Ausgangsstellung nach Fig.10c in einem Schlitz 34 der mittleren Abstützung 31 lag, nunmehr in einen Schlitz 33 der linken Abstützung 31 eintritt (Fig.11c). Hiebei wird ein Schnitt 7 in der in Fig.1 links liegenden Reifenflanke 9 hergestellt. Zuletzt erzeugt in analoger Weise das andere Schnittmesser 5 einen zweiten Schnitt in dieser Reifenflanke 9, wobei dieses Messer dann die Stellung nach Fig.11a erreicht. In dieser Stellung hat der Ausschub der Kolbenstange 20 ein Maximum erreicht, was einem Minium der Distanz H entspricht, welches Minium in Fig.11a mit H₂ bezeichnet ist. In Fig.11 haben somit alle Werkzeuge 5,6 die linke Endstellung erreicht.

Zweckmäßig ist die Ansteuerung des Antriebes 14 so ausgebildet, daß nun automatisch eine Bewegungsumkehr derart erfolgt, daß die Kolbenstange 20 des Zylinders 16 wieder eingezogen wird und dadurch die Werkzeuge 5,6 wieder nach rechts (Pfeil 15 in Fig.1) bewegt werden. Dadurch werden die Werkzeuge 5,6 wieder nach rechts (Pfeil 15 in Fig.1) bewegt werden. Dadurch werden die Lochstempel 6 aus den Öffnungen 32 der Platten 26,27 herausgezogen und erreichen die rechte Endlage nach den Fig.12b bzw. 12d. Die Distanz H erreicht hiebei ein Maximum, der entsprechende Wert ist in Fig.12a mit H₃ bezeichnet. Die Lochstempel 6 bleiben bei dieser Bewegung nach rechts unwirksam. Hingegen vollführen die Schnittmesser 5 nacheinander einen Schnitt in der in Fig.1 rechts liegenden Reifenflanke 9, da beide Schnittmesser 5 an einander entgegengesetzt gerichteten Seiten mit Schneiden 35 versehen sind. Hiebei wirkt die rechts liegende Platte 27 als Abstützung 31 beim Schnittvorgang.

Nach Durchführung dieser Arbeitsvorgänge ist der Reifen 3 an beiden Reifenflanken 9 mit zwei radial verlaufenden Schnitten 7 versehen und an einer Reifenflanke 9 mit zwischen den Schnitten 7 liegenden Löchern 13.

Die Vorrichtung wird sodann wieder in die in Fig.10 dargestellte Ausgangslage zurückgebracht, so daß der Reifen 3 um seine mittige Reifenachse in Richtung des Doppelpfeiles 36 (Fig.8) nach einer Richtung so verdreht werden kann, daß die nächsten Schnitte bzw. Löcher hergestellt werden können. In der Regel kommt es auf einen gleichmäßigen Abstand, gesehen in Umfangsrichtung des Reifens 3, der Schnitte 7 bzw. der Löcher 13 nicht an, so daß die Verdrehung in Pfeilrichtung 36 nach dem Augenmaß vorgenommen werden kann. Ist jedoch ein gleichmäßiger Abstand der Schnitte 7 bzw. der Löcher 13 voneinander gewünscht, so wird der Reifen 3 so eingerichtet, daß sich ein bereits durchgeführter radialer Anschnitt 7 in der Achse eines Schnittmessers 5 befindet. Die beschriebenen Vorgänge wiederholen sich dann.

Nach Durchführung aller radialen Schnitte 7 und Erzeugung aller gewünschter Löcher 13 kann der Reifen in Richtung des Pfeiles 32 (Fig.7) aus der Vorrichtung entnommen werden. Ein letzter Arbeitsgang, mit welchem einer der Schnitte 7 so verlängert wird, daß auch die Laufschicht 10 durchtrennt wird und damit der Reifen an der betreffenden Stelle völlig durchgeschnitten wird, kann händisch mittels einer Säge oder in einer gesonderten Stanze durchgeführt werden. Dieser verlängerte Schnitt ist in Fig.3 strichliert mit 37 bezeichnet. Es ist jedoch auch möglich, diesen Schnitt durch eine Zusatzeinrichtung der Vorrichtung zu erzeugen, welce hiezu ein gesondertes, an einer Führung 38 (Fig.8) geführtes, durch einen nicht dargestellten Antrieb in vertikaler Richtung bewegtes Stanzmesser 39 aufweist.

Die Vorrichtung ermöglicht es bei genügender Relativversetzung der Schnittmesser 5 in Bezug auf die Lochstempel 6, auch Löcher 13 allein zu erzeugen, ohne daß ein Schnitt 7 durchgeführt wird. Hiezu muß lediglich der Antrieb 14 so angesteuert werden, daß nur der betreffende Lochstempel 6 zur Wirkung gelangt. Ein solches zusätzliches Loch ist in Fig.3 dargestellt, es karn so angeardnet sein, daß es sich mit einen Schnitt 7 überdeckt.

In analoger Weise ist es möglich, durch Überlagerung einzelner Löcher 13 zahlreiche Querschnittsformen des hergestellten Loches zu erzielen. Zwei Beispiele hiefür sind in den Fig. 4 und 5 dargestellt. Für die Erzeugung des Loches 13 nach Fig.4 sind zwei Betätigungen des Lochstempels erforderlich, für das in Fig.5 dargestellte Loch 13 drei Betätigungen des Lochstempels.

Durch Höhenverstellung der Auflage 2, wobei die Lage der Werkzeuge 5,6 bzw. ihrer Führungen 4 unverändert bleibt, läßt sich die Relativlage der Löcher an der Reifenflanke 8 einstellen.

Um den Übergang von einer Reifengröße auf eine andere Reifengröße problemlos zu ermöglichen, ist es zweckmäßig, mehrere Sätze von Auflagen 2 samt zugehörigen Werkzeugen 5,6 vorzusehen, die gegeneinander austauschbar sind. Dieser Austausch ist durch Lösung des Bolzens 21 und durch Abschraubung einer die Auflage 2 tragenden Platte 40 vom Gestell 1 leicht möglich. Die einzelnen Bausätze sind dann auf die in Frage kommenden Reifengrößen abgestellt.

Die Arbeitskanten der Schnittmesser 5 und der mit ihnen zusammenwirkenden Schlitze 33 in den Abstützungen 31, ebenso wie die Arbeitskanten der Lochstempel 6 und der mit ihnen zusammenwirkenden Öffnungen 32 können zumindest teilweise aus Hartmaterial bestehen, um möglichst lange Standzeiten zu erzielen. Ferner ist es zweckmäßig, die Schnittkanten der Schnittmesser 5 geringfügig in Bezug auf die Vertikalrichtung zu neigen. Dies ergibt einen ziehenden Schnitt der Schnittmesser 5.

Zur bereits erwähnten Einarbeitung zahlreicher kleiner Löcher in die Reifenflanken 9 können Lochstempel vorhanden sein, die zahlreiche kleinere, nebeneinander angeordnete Lochdorne aufweisen, die mit entsprechend gestalteten Öffnungen in den Abstützungen 31 zusammenwirken.

Gegebenenfalls kann es gewünscht sein, die Löcher 13 auch in der anderen Reifenflanke 9 vorzusehen. Dies kann entweder dadurch erfolgen, daß der Reifen 3 nach Durchführung der beschriebenen Arbeitsvorgange aus der Vorrichtung entnommen und um 180 Grad so gewendet wird, daß nunmehr die andere Reifenflanke 9 mit den Lochstempeln 6 zusammenwirkt. Durch entsprechende Begrenzung des Hubes der Lochstempel 6 können dann die gewünschten Löcher auch in der anderen Reifenflanke 9 erzielt werden. Alternativ hiezu besteht aber auch die Möglichkeit, die Lochstempel 6 so zu verlängern, daß sie auch für die andere Reifenflanke wirksam werden. Hiezu braucht die in Fig.1 links liegende Abstützung 31 lediglich mit den für den Durchtritt der Lochstempel 6 nötigen Öffnungen versehen zu werden. Dies gilt analog auch für die oben erwähnten Lochdorne zur Erzeugung zahlreicher kleiner Löcher.

Bei Reifentypen, bei denen sehr starke Bewehrungen in den Reifenflankenwulst eingebettet sind, kann es zweckmäßig sein, diese Wülste zuerst abzuschneiden, bevor die Reifen in die Vorrichtung eingesetzt werden. Dies reduziert den Energieaufwand.

In der Regel ist ein gemeinsamer Antrieb 14 für die Schnittmesser 5 und die Lochstempel 6 zweckmäßig. In Sonderfällen kann es jedoch günstiger sein, für die Schnittmesser 5 und die Lochstempel 6 gesonderte Antriebe vorzusehen, die gemeinsam am Gestell 1 gelagert sein können.

Im Bereich der Schlitze 33, durch welche die Schnittmesser 5 hindurchtreten, kann es zweckmäßig sein, die Abstützungen 31 durch zusätzliche Platten 41 (Fig.2) zu verstärken.

Die Rohre 24 haben zweckmäßig Kreisquerschnitt. Dennoch können sich die beiden Schnittmesser 5 nicht um die Rohrachse verschwenken, da ja einerseits die beiden Rohre 24 gemeinsam an der Platte 23 befestigt sind, anderseits die Schnittmesser 5 in Längsschlitzen 42 (Fig.10) der Führungen 4 geführt sind.

Größere Reifen können ein beträchtliches Gewicht aufweisen, es kann daher für solche Reifen zweckmäßig sein, eine nicht dargestelle Einrichtung, z.B. eine Hubzange, vorzusehen, mit welcher der Reifen in die Vorrichtung eingesetzt bzw. aus ihr entnommen werden kann. Eine solche Einrichtung kann auch dazu verwendet werden, den Reifen in der Vorrichtung im Sinne des Doppelpfeiles 36 zu verdrehen.

Selbstverständlich läßt sich die Vorrichtung auch mit mehr als zwei Schnittmessern 5 bzw. Lochstempeln 6 ausbilden.

## Patentansprüche

1. Vorrichtung zur Herstellung untereinander im Bereich der Lauffläche zusammenhängender Reifensektoren (12) aus einem Reifen (3) durch Herstellung von von der Reifenöffnung (8) in den beiden Reifenflanken (9) in Richtung zur Laufschicht (10) verlaufenden Schnitten, die die Oberfläche der Laufschicht (10) jedoch nicht erreichen, wobei ein Gestell (1) für den Reifen (3) eine Auflage (2) trägt, die mit in der Arbeitsstellung des Reifens (3) zur Seite der Reifenflanken (9) liegenden Abstützungen (31) für die Reifenflanken (9) beim Schnittvorgang versehen ist, und wobei das Gestell (1) Führungen (4) für zumindest ein Schnittmesser (5) trägt, das mit Schneiden (35) zur Herstellung der Schnitte in den beiden Reifenflanken (9) versehen ist und mit einem Antrieb (14) zur Bewegung entlang der Führungen (4) verbunden ist, wobei die Führungen (4) des Schnittmessers (5) im wesentlichen senkrecht zu den durch die Abstützungen (31) gebildeten Stützflächen verlaufen, dadurch gekennzeichnet, daß die Abstützungen (31) Ausnehmungen (33) für den Eintritt der Schnittmesser aufweisen und Gegenlager für die durch den Antrieb aus einer Mittelstellung zur Erzeugung der Schnitte in den Reifenflanken hin- und herbewegten Schnittmesser (5) bilden, die einander entgegengesetzt gerichtete Schneiden (35) tragen, welche die jeweilige Reifenflanke (9) von deren Innenseite aus durchsetzen.

2. Vorrichtung nach Anspruch 1, dadurch gekennzeichnet, daß für die Herstellung jeweils eines Schnittes (7) in den beiden Reifenflanken (9) ein Schnittmesser (5) vorhanden ist, das an zwei einander entgegengesetzt gerichteten Rändern ebenso gerichtete Schneiden (35) trägt.

3. Vorrichtung nach Anspruch 1 oder 2, dadurch gekennzeichnet, daß die Ausnehmungen (33) für die Schnittmesser (5) von Schlitzen gebildet sind.

4. Vorrichtung nach einem der Ansprüche 1 bis 3, dadurch gekennzeichnet, daß zur zusätzlichen Herstellung zumindest eines Loches (13) im Bereich der Reifenflanke (9) im Gestell (1) auch Führungen (4) für zumindest einen Lochstempel (6) vorhanden sind, der durch einen Antrieb entlang der Führungen bewegbar ist, daß eine weitere Abstützung (31) in der Arbeitsstellung des Reifens (3) zwischen den beiden Reifenflanken (9) liegt und mit Öffnungen für den Eintritt des Lochstempels (6) versehen ist, wobei mindestens eine der zur Seite der Reifenflanken liegenden Abstützungen (31) Öffnungen (32) für den Durchtritt des Lochstempels (6) zusätzlich zu den Ausnehmungen (33) für den Eintritt der Schnittmesser (5) aufweist.

5. Vorrichtung nach einem der Ansprüche 1 bis 4, dadurch gekennzeichnet, daß jedes Schnittmesser (5) und zumindest ein Lochstempel (6) mit einem gemeinsamen Antrieb (14), vorzugsweise einem doppelt wirkenden Druckmittelzylinder (16), verbunden sind.

6. Vorrichtung nach einem der Ansprüche 1 bis 5, dadurch gekennzeichnet, daß zumindest zwei Lochstempel (6) bzw. Schnittmesser (5) vorhanden sind, die relativ zueinander in ihrer Bewegungsrichtung versetzt angeordnet sind.

7. Vorrichtung nach einem der Ansprüche 1 bis 6, dadurch gekennzeichnet, daß zwei jeweils für beide Reifenflanken (9) wirksame Schnittmesser (5) und zwei Lochstempel (6), alternierend miteinander, in Umfangsrichtung des Reifens (3) gesehen, relativ zueinander versetzt angeordnet sind, vorzugsweise in gleichmaßigen Abstanden voneinander.

8. Vorrichtung nach einem der Anspruche 1 bis 7, dadurch gekennzeichnet, daß die Auflage (2) und bzw. oder die Abstutzungen (31) und bzw. oder die Schnittmesser (5) bzw Lochstempel (6) auswechselbar und bzw. oder höhenverstellba sind.

9. Vorrichtung nach einem der Ansprüche 1 bis 8, dadurch gekennzeichnet, daß die Auflage (2) entsprechend der Krümmung der inneren Öffnung (8) des zu bearbeitenden Reifens (3) abgewinkelt oder gebogen ist.

10. Vorrichtung nach einem der Ansprüche 1 bis 9, dadurch gekennzeichnet, daß der Antrieb vom Gestell (1) getragen ist.

11. Vorrichtung nach einem der Ansprüche 1 bis 9, dadurch gekennzeichnet, daß jedes Schnittmesser (5) an einem Rohr (24) befestigt ist, das in den Führungen (4) längsverschiebbar geführt und mit dem Antrieb (14) verbunden ist.

12. Vorrichtung nach Anspruch 11, dadurch gekennzeichnet, daß zwei in Umfangsrichtung des Reifens (3) gegeneinander versetzt angeordnete Schnittmesser (5) an zwei Rohren (24), vorzugsweise mit Kreisquerschnitt, befestigt sind, die jeweils am Stimende durch ein Querstück, z.B. eine Platte (23), verbunden sind, das mit dem Antrieb (14), vorzugsweise der Kolbenstange (20) eines doppeltwirkenden hydraulischen Zylinders (16), bewegungsschlüssig verbunden ist.

13. Vorrichtung nach einem der Ansprüche 1 bis 12, dadurch gekennzeichnet, daß der von zumindest einem Schnittmesser (5) erzeugte Schnitt (7) bis in die Laufschicht (10) des Reifens (3) hineinreicht.

14. Vorrichtung nach einem der Ansprüche 1 bis 13, dadurch gekennzeichnet, daß zusätzlich ein Messer (39) vorhanden ist, welches den Reifen (3) an einer Stelle völlig, also auch im Bereich der Lauffläche, durchtrennt.

15. Vorrichtung nach einem der Ansprüche 1 bis 14, dadurch gekennzeichnet, daß Lochstempel (6) für die Erzeugung von Löchern (13) in beiden Reifenflanken (9) vorgesehen sind.

16. Vorrichtung nach einem der Ansprüche 1 bis 15, dadurch gekennzeichnet, daß zumindest ein Lochstempel (6) in Form einer Vielzahl nebeneinander angeordneter Lochdorne ausgebildet ist.

17. Vorrichtung nach einem der Ansprüche 1 bis 16, dadurch gekennzeichnet, daß eine Einrichtung, z.B. eine Hubzange, zur automatischen Verdrehung des Reifens (3) nach Durchführung der Schnitte (7) vorgesehen ist.

## Claims

1. A device for producing tire sectors (12) which are connected in the area of the tire tread of a tire (3) by producing cuts which run from the tire opening (8) in the two flanks (9) of the tire in the direction of the tread layer (10) but do not reach the surface of the tread layer (10), where a frame (1) for the tire (3) has a rest (2) which is provided with supports (31) for the tire flanks (9) in the cutting operation, said supports being on the side of the tire flanks (9) in the working position of the tire (3), and where the frame (1) has guides (4) for at least one cutting blade (5) which is provided with cutting edges (35) to produce the cuts in the two tire flanks (9) and with a drive (14) for movement along the guides (4), where the guides (4) of the cutting blade (5) run essentially perpendicular to the supporting faces formed by the supports (31), characterized in that the supports (31) have recesses (33) for entering of the cutting blades and they form abutments for the cutting blades (5) which are moved back and forth by the drive from a middle position to produce the cuts in the tire flanks and which have oppositely directed cutting edges (35) that pass through the respective tire flank (9) from the inside out.

2. A device according to claim 1, characterized in that to produce a cut (7) in each of the two tire flanks (9), a cutting blade (5) is provided which has cutting edges (35) pointing in opposite directions on two edges which are equally directed.

3. A device according to claim 1 or 2, characterized in that the recesses (33) for the cutting blades (5) are formed by slits.

4. A device according to one of claims 1 through 3, characterized in that for additional production of at least one hole (13) in the area of the tire flank (9), guides (4) for at least one hole punch (6) are also provided in the frame (1), said hole punch being movable along the guides by a drive; another support (31) is located between the two tire flanks (9) in the working position of the tire (3) and is provided with openings for the insertion of the hole punch (6), where at least one of the supports (31) located on the side of the tire flanks has openings (32) for the passage of the hole punch (6) in addition to the recesses (33) for entering of the cutting blades (5).

5. A device according to one of claims 1 through 4, characterized in that each cutting blade (5) and at least one hole punch (6) are connected to a common drive (14), preferably a double-acting pneumatic cylinder (16).

6. A device according to one of claims 1 through 5, characterized in that there are at least two hole punches (6) or cutting blades (5) arranged in offset relative to one another in their direction of movement.

7. A device according to one of claims 1 through 6, characterized in that two cutting blades (5) which are operative for both tire flanks (9) and two hole punches (6) are arranged with an offset relative to one another and in alternation with one another, as seen in the circumferential direction of the tire (3), preferably at equal intervals from one another.

8. A device according to one of claims 1 through 7, characterized in that the rest (2) and/or the supports (31) and/or the cutting blades (5) or hole punches (6) are interchangeable and/or adjustable in height.

9. A device according to one of claims 1 through 8, characterized in that the rest (2) is bent or curved according to the curvature of the inside opening (8) of the tire (3) to be machined.

10. A device according to one of claims 1 through 9, characterized in that the drive is carried by the frame (1).

11. A device according to one of claims 1 through 9, characterized in that each cutting blade (5) is attached to a pipe (24) which is connected to the drive (14) and is guided in its longitudinal displacement in the guides (4).

12. A device according to claim 11, characterized in that two cutting blades (5) which are arranged with an offset relative to one another in the circumferential direction of the tire (3) are mounted on two pipes (24), which preferably have a circular cross section and are each connected at the end face by a cross piece such as a plate (23) which is connected in a movement-actuated manner to the drive (14), preferably the piston rod (20) of a double-acting hydraulic cylinder (16).

13. A device according to one of claims 1 through 12, characterized in that the cut (7) produced by at least one cutting blade (5) extends into the tread layer (10) of the tire (3).

14. A device according to one of claims 1 through 13, characterized in that an additional blade (39) is provided which cuts through the tire (3) completely at a point in the area of the tire tread.

15. A device according to one of claims 1 through 14, characterized in that hole punches (6) are provided to produce holes (13) in both tire flanks (9).

16. A device according to one of claims 1 through 15, characterized in that at least one hole punch (6) is designed in the form of a plurality of hole piercing mandrels arranged side by side.

17. A device according to one of claims 1 through 16, characterized in that a device such as a lifting gripper is provided for automatically turning the tire (3) after performing the cuts (7).

## Revendications

1. Dispositif pour réaliser des secteurs de pneu (12) interconnectés dans la région de la chape, à partir d'un pneu (3), par réalisation d'incisions partant de l'ouverture de pneu (8) et dans les deux flancs (9), dans la direction de la couche d'usure (10), mais qui n'atteignent pas la surface de la couche d'usure (10), dispositif dans lequel un cadre (1) pour le pneu (3) porte un support (2) muni d'appuis (31) pour les flancs de pneu (9) lors de l'opération de coupe et positionnés sur le côté des flancs de pneu (9) lorsque le pneu est en position de travail, le cadre (1) portant des guides (4) pour au moins un couteau inciseur (5) pourvu de lames (35) pour la réalisation des incisions dans les deux flancs (9) du pneu, et étant relié à une commande (14) pour le déplacement le long des guides (4), les guides (4) du couteau inciseur (5) étant sensiblement perpendiculaires aux surfaces d'appui formées par les éléments d'appui (31), caractérisé en ce que les appuis (31) présentent des découpures (33) pour la pénétration des couteaux inciseurs et forment des butées pour les couteaux inciseurs (5) animés d'un mouvement de va-et-vient par la commande, pour produire les incisions dans les flancs du pneu, à partir d'une position médiane, couteaux inciseurs portant des lames (35) d'orientation antagoniste qui traversent le flanc de pneu (9) respectif, partant de sa face intérieure.

2. Dispositif selon la revendication 1, caractérisé en ce que pour réaliser chaque fois une incision (7) dans les deux flancs (9) du pneu, on prévoit un couteau inciseur (5) qui porte, sur deux bords d'orientation antagoniste, des lames (35) orientées de la même manière.

3. Dispositif selon la revendication 1 ou 2, caractérisé en ce que les découpures (33) destinées aux couteaux inciseurs (5) sont formées par des fentes.

4. Dispositif selon l'une des revendications 1 à 3, caractérisé en ce que pour réaliser, en plus, au moins un trou (13) dans la zone du flanc de pneu (9), on a également prévu dans le cadre (1) des guides (4) pour au moins un poinçon perforateur (6) qui peut être mis en mouvement le long des guides, par une commande, en ce qu'un autre appui (31) est prévu entre les deux flancs de pneu (9), en position de travail du pneu, et est pourvu d'ouvertures pour la pénétration du poinçon perforateur (6), dispositif dans lequel au moins un des appuis (31) se trouvant sur le côté du flanc du pneu présente des ouvertures (32) pour le passage du poinçon perforateur (6) en plus des découpures (33) pour la pénétration des couteaux inciseurs (5).

5. Dispositif selon l'une des revendications 1 à 4, caractérisé en ce que chacun des couteaux inciseurs (5) et au moins un poinçon perforateur (6) sont reliés à une commande commune (14), de préférence un vérin à double effet actionné par fluide sous pression (16).

6. Dispositif selon l'une des revendications 1 à 5, caractérisé en ce qu'au moins deux poinçons perforateurs (6) ou couteaux inciseurs (5) sont agencés avec un décalage entre eux dans le sens de leur déplacement.

7. Dispositif selon l'une des revendications 1 à 6, caractérisé en ce que deux couteaux inciseurs (5) travaillant respectivement les deux flancs de pneu (9) et deux poinçons perforateurs (6) sont agencés en alternance les uns avec les autres et avec un décalage entre eux, dans le sens de la périphérie du pneu (3), et de préférence à des intervalles réguliers.

8. Dispositif selon l'une des revendications 1 à 7, caractérisé en ce que le support (2) et/ou les appuis (31) et/ou les couteaux inciseurs (5) ou les poinçons perforateurs (6) sont interchangeables et/ou déplaçables en hauteur.

9. Dispositif selon l'une des revendications 1 à 8, caractérisé en ce que le support (2) est coudé ou cintré conformément à la courbure de l'ouverture intérieure (8) du pneu (3) devant être travaillé.

10. Dispositif selon l'une des revendications 1 à 9, caractérisé en ce que la commande est portée par le cadre (1).

11. Dispositif selon l'une des revendications 1 à 9, caractérisé en ce que chacun des couteaux inciseurs (5) est fixé à un tube (24) guidé de manière à coulisser dans le sens de la longueur dans les guides (4) et relié à la commande (14).

12. Dispositif selon la revendication 11, caractérisé en ce que deux couteaux inciseurs (5) agencés avec un décalage entre eux dans le sens de la périphérie du pneu (3) sont fixés à deux tubes (24), de préférence de section transversale circulaire, qui sont reliés respectivement, à une extrémité frontale, par une pièce transversale, p.ex. une plaque (23), laquelle est reliée, pour être déplacée, à la commande (14), de préférence à la tige de piston (20) d'un vérin hydraulique à double effet (16).

13. Dispositif selon l'une des revendications 1 à 12, caractérisé en ce que l'incision (7) produite par au moins un couteau inciseur (5) s'avance jusque dans la couche d'usure (10) du pneu (3).

14. Dispositif selon l'une des revendications 1 à 13, caractérisé en ce qu'on prévoit encore un couteau (39) qui sectionne le pneu (3) complètement, et donc aussi dans la zone de la chape, à un endroit.

15. Dispositif selon l'une des revendications 1 à 14, caractérisé en ce que des poinçons perforateurs (6) sont prévus pour réaliser des trous (13) dans les deux flancs (9) du pneu.

16. Dispositif selon l'une des revendications 1 à 15, caractérisé en ce qu'au moins un poinçon perforateur (6) est réalisé sous forme d'une multiplicité de mandrins perforateurs disposés les uns à côté des autres.

17. Dispositif selon l'une des revendications 1 à 16, caractérisé en ce qu'on a prévu un mécanisme, p.ex. une pince de levage, pour faire tourner le pneu (3) automatiquement après la réalisation des incisions (7).
